Europäisches Patentamt

European Patent Office

Office européen des brevets

(11) Publication number: **0 120 586**
**B1**

# (12) EUROPEAN PATENT SPECIFICATION

(45) Date of publication of patent specification: **27.12.89**

(51) Int. Cl.⁴: **H 04 N 5/30, H 04 N 5/18**

(21) Application number: **84301040.6**

(22) Date of filing: **17.02.84**

(54) **Signal processing circuits.**

(30) Priority: **25.02.83 JP 26780/83**

(43) Date of publication of application:
**03.10.84 Bulletin 84/40**

(45) Publication of the grant of the patent:
**27.12.89 Bulletin 89/52**

(84) Designated Contracting States:
**DE FR GB NL**

(56) References cited:
**DE-B-1 193 987**
**GB-A-1 176 462**
**GB-A-2 074 417**

(73) Proprietor: **SONY CORPORATION**
**7-35 Kitashinagawa 6-Chome Shinagawa-ku**
**Tokyo 141 (JP)**

(72) Inventor: **Sase, Masatoshi c/o Sony Corporation**
**7-35 Kitashinagawa 6-chome Shinagawa-ku**
**Tokyo (JP)**
Inventor: **Yamanaka, Seisuke c/o Sony**
**Corporation**
**7-35 Kitashinagawa 6-chome Shinagawa-ku**
**Tokyo (JP)**

(74) Representative: **Cotter, Ivan John et al**
**D. YOUNG & CO. 10 Staple Inn**
**London WC1V 7RD (GB)**

Courier Press, Leamington Spa, England.

## Description

This invention relates to image signal processing circuits.

An output signal of an image sensor may be supplied through a preamplifier to a gamma correction circuit. Since the gamma correction circuit is a non-linear circuit, its input signal has to be matched with a constant dc level. The output signal of the image sensor has a variation in its dc potential, so that it is transmitted by ac coupling to absorb this variation. For this purpose, a clamping circuit is provided at the front end or stage of the gamma correction circuit.

The clamping circuit serves to clamp the image pickup signal so that the black level thereof is of a predetermined dc potential. To this end, a black level detecting portion (generally referred to as an optical black) comprising a light shielding mask is provided in a portion of an image pickup surface of the image sensor (or image pickup device) and an interval in the signal corresponding to the black level detecting portion is clamped to a predetermined dc potential. However, since noise is included in the interval corresponding to the black level detecting portion, the clamping circuit will have made the portion where the noise was added to the black level constant, so that it is impossible to expect the inherent operation to make the black level constant.

To reduce the influence of this noise, the clamping operation could be performed with respect to the mean value of several black level detection operations (whereby the noise component is cancelled) instead of a single black level detection operation. While such a technique enables the influence of noise to be substantially reduced, it gives rise to the problem that it is impossible to eliminate completely a sag component caused by the ac coupling of the circuit at the front end or stage.

UK Patent Application Publication No. GB—A—2 074 417 discloses an image signal processing circuit comprising an image signal source (luminance signal source), means (a luminance processing unit) connected to receive an image signal from the image signal source, a filter connected to filter the image signal prior to the signal being applied to the luminance processing unit, and switching means operative to switch the filter periodically into respective different configurations when it is receiving respective different parts of the image signal. Specifically, during the whole of the horizontal flyback/blanking period, the filter is switched into a configuration in which it is intended to suppress noise which otherwise would be passed to the luminance processing unit.

GB—A—1 176 462 discloses an image signal processing circuit comprising a clamping circuit which receives an input video signal via capacitors, a buffer amplifier and a resistor.

According to the present invention there is provided a signal processing circuit comprising:
an image signal source;

means connected to receive an image signal from the image signal source;
a filter connected to filter the image signal prior to the signal being applied to said means; and
switching means operative to switch the filter periodically into respective different configurations when it is receiving respective different parts of the image signal;
characterised in that:
the image signal source is an image sensor that has an optical black level detecting portion;
a buffer circuit is connected to receive the image signal from the image sensor;
the filter is connected between the buffer circuit and said means;
the filter is capable of adopting either a low pass filter configuration or a low impedance configuration;
said means is a clamping circuit operative to clamp the level of the intervals of the image signal from the buffer circuit that correspond to the black level detecting portion to a predetermined level; and
the switching means is operative to switch the filter into the low pass filter configuration during said intervals that correspond to the black level detecting portion and to switch the filter into the low impedance configuration at other times.

A preferred embodiment of the present invention described hereinbelow provides an image signal processing circuit which can perform the clamping operation in such a manner that the influences of noise and sag are eliminated or at least reduced, which can follow drift of the black level, and in which deterioration of the signal-to-noise (S/N) ratio of an image pickup signal output is eliminated or at least reduced.

The invention will now be further described, by way of illustrative and non-limiting example, with reference to the accompanying drawing, in which:

Figure 1 is a schematic diagram showing an optical black level detecting portion of a signal processing circuit embodying the present invention;

Figure 2 is a connection diagram of the signal processing circuit embodying the present invention; and

Figure 3 shows waveform diagrams which are used to describe the operation of the signal processing circuit embodying the present invention.

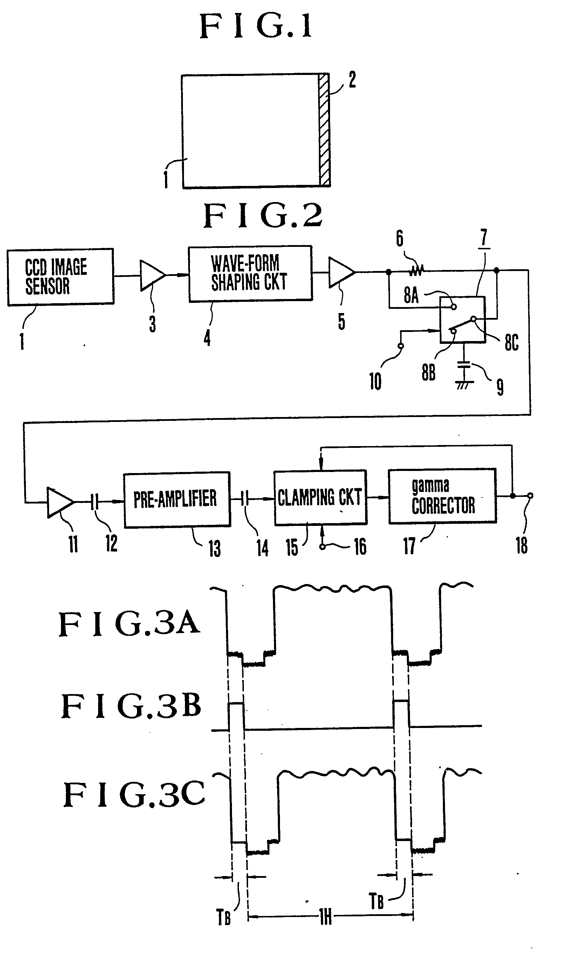

Figure 1 shows an image sensor 1, for example a CCD (charge coupled device) image sensor of a colour video camera. A black level detecting portion (or optical black) 2 comprising a light shielding portion of a stripe-like form is provided on the side of an end of scanning in the horizontal direction of the image sensor 1. As shown in Figure 2, an output signal of the image sensor 1 is supplied through a buffer amplifier 3 to a waveform shaping circuit 4. The waveform shaping circuit 4 comprises a sample and hold circuit and an output signal thereof is supplied to a buffer circuit 5. The buffer circuit 5 is of low output impedance.

An output terminal of the buffer circuit 5 is connected through a resistor 6 to an input terminal of a buffer circuit 11 of high input impedance, and is also connected to an input terminal 8A of a switching circuit 7. Another input terminal 8B of the switching circuit 7 is grounded through a capacitor 9. The switching circuit 7 is controlled by a switching pulse signal supplied from a terminal 10. The input terminal 8A is connected to an output terminal 8C in an interval when the switching pulse signal is at a low level, while the input terminal 8B is connected to the output terminal 8C in an interval when the switching pulse signal is at a high level.

When the input terminal 8B of the switching circuit 7 is connected to the output terminal 8C, a low-pass filter comprising the resistor 6 and the capacitor 9 is formed. On the other hand, when the input terminal 8A is connected to the output terminal 8C, the low-pass filter is not formed because the capacitor 9 is disconnected from the circuit and the resistor 6 is shorted out so that the output terminal of the buffer circuit 5 and the input terminal of the buffer circuit 11 are directly coupled together. The cut-off frequency of the low-pass filter constituted by the resistor 6 and capacitor 9 is set to have such an extremely low value as to respond to drift of the black level of the image pickup output due to a change in temperature or the like. In addition, when the operation of the low-pass filter is shut off, an additional impedance is inserted into the signal line; therefore, the resistor 6 is shorted out to prevent the S/N ratio of the signal from deteriorating.

An output terminal of the buffer circuit 11 is connected through a coupling capacitor 12 to an input terminal of a pre-amplifier 13. An output terminal of the pre-amplifier 13 is connected through a coupling capacitor 14 to an input terminal of a clamping circuit 15. A gamma correction circuit 17 is connected to the clamping circuit 15 and the image pickup output signal, which has been gamma-corrected, is available at an output terminal 18. A clamping pulse signal is supplied from a terminal 16 to the clamping circuit 15. The clamping circuit 15 comprises, for example, a feedback clamping circuit.

Figure 3A shows the image pickup signal obtained at the output of the buffer circuit 5. The image pickup signal includes an interval $T_B$, to which noise has been added, corresponding to the black level detecting portion on the side of an end of a horizontal interval (1H). Figure 3B shows the switching pulse signal supplied from the terminal 10 to the switching circuit 7, which signal becomes of a high level in the interval $T_B$ in response to the black level detecting portion so that the low-pass filter is formed or operative only in the interval $T_B$. Therefore, a mean value of the signal level in the interval $T_B$ corresponding to the black level detecting portion, until before the interval 1H, is stored in the capacitor 9 of the low-pass filter.

Since the mean value of the noise is zero, because the noise is a random signal, an image pickup signal, from which the noise in the interval $T_B$ corresponding to the black level detecting portion has been eliminated, is obtained at the output of the low-pass filter constituted by the resistor 6 and the capacitor 9, as shown in Figure 3C. Thus, it is possible to prevent the clamping circuit 15 from being influenced by the noise. Moreover, the low-pass filter can respond to level drift in the interval $T_B$ corresponding to the black level detecting portion due to a change in temperature or the like.

The present invention can also be applied in cases where any image sensors (such as a vidicon or the like) other than a CCD are used.

In addition, the present invention is not limited to video cameras but can be also applied to still cameras for recording an image pickup signal on a magnetic disc.

Furthermore, the clamping circuit is not limited to feedback clamping circuits: any other circuits which are constituted so as to detect the level in the interval $T_B$ corresponding to the black level detecting portion from the output of the buffer circuit 11 may be used.

In the arrangement described above, since the noise in the interval corresponding to the black level detecting portion is eliminated from the image pickup output signal before the signal is supplied to the clamping circuit, the level at which the noise was added to the black level is clamped to a predetermined dc potential by the clamping circuit, thereby enabling prevention of the appearance of line noise on a screen used for viewing the image pickup output signal. In contrast to a circuit for replacing the interval of the black level detecting portion by a potential which does not include other noise, the arrangement described above enables drift of the black level of the image pickup output signal due to a change in temperature or the like to be followed.

In addition, the arrangement described above has the advantage that, in contrast to the case of detecting the mean value of several (plural) black levels of the image pickup output signal, it is not influenced by a sag component caused by the ac coupling.

Furthermore, a signal processing circuit embodying the present invention may be achieved merely by the addition of a low-pass filter and a switching circuit. Therefore, the circuit construction can be simplified and excellent stable operation can be obtained.

## Claims

1. An image signal processing circuit comprising:

an image signal source (1);

means (15) connected to receive an image signal from the image signal source (1);

a filter connected to filter the image signal prior to the signal being applied to said means (15); and

switching means (7) operative to switch the filter periodically into respective different configurations when it is receiving respective different parts of the image signal;

characterised in that:

the image signal source (1) is an image sensor that has an optical black level detecting portion (2);

a buffer circuit (3, 5) is connected to receive the image signal from the image sensor (1);

the filter is connected between the buffer circuit (3, 5) and said means (15);

the filter is capable of adopting either a low pass filter configuration or a low impedance configuration;

said means (15) is a clamping circuit operative to clamp the level of the intervals (TB) of the image signal from the buffer circuit (3, 5) that correspond to the black level detecting portion (2) to a predetermined level; and

the switching means (7) is operative to switch the filter into the low pass filter configuration during said intervals (TB) that correspond to the black level detecting portion (2) and to switch the filter into the low impedance configuration at other times.

2. A signal processing circuit according to claim 1, wherein the output of the buffer circuit (3, 5) is supplied through a coupling capacitor (14) to the clamping circuit (15).

3. A signal processing circuit according to claim 1 or claim 2, including a further buffer circuit (11) provided on the output side of the low-pass filter.

4. A signal processing circuit according to claim 1, claim 2 or claim 3, wherein the low-pass filter comprises a resistor (6) and a capacitor (9), and wherein the switching means (7) is so operative that, in the low pass filter configuration, the resistor (6) is inserted in the signal path and the capacitor (9) is inserted between one end of the resistor (6) and a reference potential point, and, in the low impedance configuration, the resistor (6) is shorted out and the capacitor (9) is not connected to the signal path.

5. A signal processing circuit according to any one of the preceding claims, wherein said intervals ($T_B$) corresponding to the black level detecting portion are each included in a horizontal blanking interval of the image signal.

6. A signal processing circuit according to any one of the preceding claims, wherein the image sensor (1) is a CCD image sensor.

**Patentansprüche**

1. Bildsignalverarbeitungsschaltung
mit einer Bildsignalquelle (1),
mit Mitteln (15), der ein Bildsignal von der Bildsignalquelle (1) zugeführt wird,
mit einem Filter zur Filterung des Bildsignals, bevor dieses den genannten Mitteln (15) zugeführt wird,
sowie mit Schaltmitteln (7) zum periodischen Umschalten des Filters in jeweils unterschiedliche Konfigurationen, wenn ihm entsprechend unterschiedliche Teile des Bildsignals zugeführt werden,

dadurch gekennzeichnet,

daß die Bildsignalquelle (1) ein Bildsensor mit einem optischen Schwarzpegel-Detektorbereich (2) ist,

daß eine Pufferschaltung (3, 5) vorgesehen ist, die das Bildsignal von dem Bildsensor (1) aufnimmt,

daß das Filter zwischen der Pufferschaltung (3, 5) und den Mitteln (15) angeordnet ist,

daß das Filter entweder eine Tiefpaßfilterkonfiguration oder eine Konfiguration mit niedriger Impedanz annehmen kann,

daß die genannten Mittel (15) eine Klemmschaltung bilden, die den Pegel der dem Schwarzpegel-Detektorbereich (2) entsprechenden Intervalle (TB) des von der Pufferschaltung (3, 5) kommenden Bildsignals auf einem vorbestimmten Pegel festklemmt,

und daß die Schaltmittel (7) das Filter während dieser dem Schwarzpegel-Detektorbereich (2) entsprechenden Intervalle (TB) in die Tiefpaßfilterkonfiguration und in den übrigen Zeiten in die Konfiguration mit niedriger Impedanz schalten.

2. Signalverarbeitungsschaltung nach Anspruch 1, bei der das Ausgangssignal der Pufferschaltung (3, 5) der Klemmschaltung (15) über einen Koppelkondensator (14) zugeführt wird.

3. Signalverarbeitungsschaltung nach Anspruch 1 oder 2, bei der auf der Ausgangsseite des Tiefpaßfilters eine weitere Pufferschaltung (11) vorgesehen ist.

4. Signalverarbeitungsschaltung nach Anspruch 1, 2 oder 3, bei der das Tiefpaßfilter einen Widerstand (6) und einen Kondensator (9) enthält und bei der die Schaltmittel (7) bewirken, daß in der Tiefpaßfilterkonfiguration der Widerstand (6) in dem Signalweg und der Kondensator zwischen einem Anschluß des Widerstands (6) und einem Referenzpotentialpunkt liegt und in der Konfiguration mit niedriger Impedanz der Widerstand (6) kurzgeschlossen und der Kondensator (9) nicht mit dem Signalweg verbunden ist.

5. Signalverarbeitungsschaltung nach einem der vorhergehenden Ansprüche, bei der die dem Schwarzpegel-Detektorbereich entsprechenden Intervalle (TP) jeweils in einem Zeilenaustastintervall enthalten sind.

6. Signalverarbeitungsschaltung nach einem der vorhergehenden Ansprüche, bei der der Bildsensor (1) ein CCD-Bildsensor ist.

**Revendications**

1. Circuit de traitement de signaux d'image comportant:

une source de signaux d'image (1);

un dispositif (15) connecté pour recevoir un signal d'image provenant de la source de signaux d'image (1);

un filtre connecté de manière à filtrer le signal d'image avant qu'il ne soit appliqué audit dispositif (15); et

un dispositif de commutation (7) ayant pour fonction de commuter périodiquement le filtre dans des configurations différentes respectives lorsqu'il reçoit des parties différentes respectives du signal d'image;

caractérisé en ce que:

la source de signaux d'image (1) est un capteur d'image qui comporte une partie de détection du niveau du noir optique (2);

un circuit tampon (3, 5) est connecté de manière à recevoir le signal d'image provenant du capteur d'image (1);

le filtre étant connecté entre le circuit tampon (3, 5) et ledit dispositif (15);

le filtre étant à même d'adopter une configuration de filtre passe-bas ou une configuration de basse impédance;

ledit dispositif (15) étant un circuit de verrouillage ayant pour fonction de verrouiller le niveau des intervalles (TB) du signal d'image provenant du circuit tampon (3, 5) correspondant à la partie de détection du niveau du noir (2) à un niveau prédéterminé; et

le dispositif de commutation (7) ayant pour fonction de commuter le filtre dans la configuration de filtre passe-bas pendant lesdits intervalles (TB) qui correspondent à la partie de détection du niveau du noir (2) et de commuter le filtre dans la configuration de basse impédance à d'autres instants.

2. Circuit de traitement de signaux selon la revendication 1, dans lequel la sortie du circuit tampon (3, 5) est fournie, par un condensateur de couplage (14), au circuit de verrouillage (15).

3. Circuit de traitement de signaux selon la revendication 1 ou la revendication 2, comportant un autre circuit tampon (11) prévu sur le côté de sortie du filtre passe-bas.

4. Circuit de traitement de signaux selon la revendication 1, la revendication 2 ou la revendication 3, dans lequel le filtre passe-bas comporte une résistance (6) et un condensateur (9) et dans lequel le dispositif de commutation (7) a pour fonction que, dans la configuration de filtre passe-bas, la résistance (6) soit intercalée dans le circuit de signaux et que le condensateur (9) soit intercalé entre une extrémité de la résistance (6) et un point de référence de potentiel tandis que, dans la configuration de basse impédance, la résistance (6) est en court-circuit et le condensateur (9) n'est pas connecté au circuit de signaux.

5. Circuit de traitement de signaux selon l'une quelconque des revendications précédentes, dans lequel lesdits intervalles ($T_B$) correspondant à la partie de détection du niveau du noir sont inclus chacun dans un intervalle de blocage horizontal du signal d'image.

6. Circuit de traitement de signaux selon l'une quelconque des revendications précédentes, dans lequel le capteur d'image (1) est un capteur d'image CCD.

# F I G.1

# F I G.2

CCD IMAGE SENSOR

WAVE-FORM SHAPING CKT

8A

8C

10

8B

9

PRE-AMPLIFIER

CLAMPING CKT

gamma CORRECTOR

11 12

13

14 15

16

17

18

F I G.3A

F I G.3B

F I G.3C

$T_B$

$T_B$

$T_B$

1H